# FASCICULE DE BREVET EUROPEEN

(11) **EP 0 634 725 B1**
(45) Date de publication et mention de la délivrance du brevet: **27.10.1999**
(21) Numéro de dépôt: 94401598.1
(22) Date de dépôt: 11.07.1994
(51) Int. Cl.: G06F 15/16, G06F 15/80

(54) **Noeud de processeurs**
Prozessorenknoten
Node of processors

(30) Priorité: 15.07.1993 FR 9308712
(43) Date de publication de la demande: 18.01.1995
(73) Titulaire: BULL S.A., 92800 Puteaux (FR)
(72) Inventeur: Billard, Christian, F-75015 Paris (FR); Joly, Jean-Louis, F-78450 Villepreux (FR); Chevaux, René, F-91790 Boissy S/S St Yon (FR); Pouliquen, Christian, F-78650 Beynes (FR)

(56) Documents cités:
- EUROCON 84 COMPUTERS IN COMMUNICATION AND CONTROL, 26 Septembre 1984, BRIGHTON, GB pages 333 - 337 M. WYRZYKOWSKI 'A homogenous modular operating system for multimicrocomputer - real-time control applications'
- 10TH INTERNATIONAL CONFERENCE ON DISTRIBUTED COMPUTING SYSTEMS, 28 Mai 1990, PARIS, FRANCE pages 270 - 277 K. PADMANABHAN 'Hierarchical communication in cube-connected multiprocessors'
- PATENT ABSTRACTS OF JAPAN vol. 14, no. 153 (P-1026) 23 Mars 1990 & JP-A-02 012 361 (FUJITSU LTD) 17 Janvier 1990
- IBM TECHNICAL DISCLOSURE BULLETIN., vol.30, no.10, Mars 1988, NEW YORK US pages 444 - 446 'Shared and private cache'
- IBM TECHNICAL DISCLOSURE BULLETIN., vol.33, no.11, Avril 1991, NEW YORK US pages 362 - 365 'Second-level shared cache implementation for multiprocessor computers with a common interface for the second-level shared cache and the second-level private cache'

## Description

La présente invention concerne un noeud de processeurs.

On sait que les ensembles informatiques à mémoire partagée comportent généralement un grand nombre de processeurs réunis selon des noeuds associés entre eux par des liaisons selon un nombre de noeuds variable jusqu'à une configuration maximale. Chaque noeud comporte une série de processeurs et une ou plusieurs mémoires locales qui sont des parties d'une mémoire générale. Selon une configuration classique, les processeurs et la ou les mémoires locales sont tous reliés de façon directe à un bus de liaison commun du type à liaison parallèle. Cette solution présente l'avantage d'un accès très direct de chaque processeur à chaque mémoire locale mais présente l'inconvénient de faire passer tous les messages d'interrogation et de transfert d'informations par le même bus de liaison de sorte que le débit maximal de messages sur le bus de liaison est très rapidement atteint et il se pose alors un problème d'accès au bus de liaison, les messages qui ne peuvent pas être transmis étant mis en attente jusqu'à ce que le bus de liaison soit disponible. De plus, lorsque l'on augmente le nombre de processeurs on augmente de façon très importante le nombre de messages d'une part en raison des messages d'interrogations et de transfert d'informations qui sont rendus nécessaires par l'existence des nouveaux processeurs, mais également en raison des messages supplémentaires de cohérence qui sont nécessaires lorsque plusieurs processeurs travaillent sur les mêmes informations et sont amenés à modifier celles-ci alors qu'elles sont simultanément demandées par d'autres processeurs.

On connaît du brevet japonais JP 2 012 361 un système informatique dans lequel les noeuds comportent des processeurs, une mémoire locale partagée et un bus local assurant une liaison parallèle entre les processeurs. Le système comprend également un adaptateur permettant le transfert mutuel de requêtes entre le bus local et un bus global.

De façon classique on a cherché à faire face à l'augmentation du débit de messages en améliorant les performances des blocs mémoires, en particulier en augmentant leur rapidité d'accès, et en améliorant les performances des bus, c'est-à-dire en augmentant le débit de transmission des messages sur les bus. De telles améliorations ne peuvent généralement être obtenues qu'en utilisant des technologies coûteuses qui augmentent de façon importante le coût de l'ensemble informatique.

Un but de l'invention est de proposer un noeud de processeur ayant une structure originale améliorant les débits de messages quelle que soit la technologie utilisée pour la réalisation des blocs mémoires ou des bus de liaison.

Selon l'invention, on propose un noeud de processeur tel que défini dans la revendication 1.

Ainsi, le bus local n'est utilisé que pour la transmission de messages directement utiles aux processeurs tandis que le bus réseau est utilisé pour la transmission de messages de liaisons avec d'autres noeuds de sorte que l'on minimise le nombre de messages circulant sur chaque bus. Tout en minimisant le débit de messages on notera que cette disposition permet néanmoins un accès simultané à la mémoire locale et au cache partagé tant par le bus local que par le bus réseau.

Selon une version avantageuse de l'invention, le noeud de processeurs comporte au moins un contrôleur de liaisons séries relié au bus réseau et assurant une relation avec un noeud adjacent ou le cas échéant un organe d'entrée/sortie. Ainsi, dans la transmission des messages à l'intérieur du noeud, on bénéficie de la faible latence du bus parallèle pour avoir un accès rapide à l'information locale et on profite du débit élevé des liaisons séries pour mettre à jour des informations qui sont stockées dans la mémoire locale et dans le cache partagé et introduire dans le cache partagé des nouvelles copies d'informations détenues dans la mémoire locale d'un autre noeud afin de bénéficier à nouveau ultérieurement de la faible latence de la liaison parallèle interne au noeud.

Selon un aspect avantageux de l'invention, le noeud comporte deux bus locaux, chacun associé aux processeurs, à un cache partagé et à une mémoire locale, et deux bus réseaux également chacun associé à un cache partagé et à une mémoire locale. Ainsi, sans augmenter le nombre de prises nécessaires sur chaque bus, on augmente la capacité totale de messages pouvant être transmis entre les processeurs d'une part et le cache partagé et la mémoire locale d'autre part.

D'autres caractéristiques et avantages de l'invention apparaîtront encore à la lecture de la description qui suit d'un mode de réalisation particulier non limitatif de l'ensemble selon l'invention en relation avec les figures parmi lesquelles :
- la figure 1 est un diagramme schématique illustrant la structure générale de l'ensemble informatique selon l'invention,
- la figure 2 est un diagramme schématique illustrant la structure d'un noeud selon un mode de réalisation de l'invention,
- la figure 3 illustre une variante de réalisation de la structure du noeud de la figure 2,
- la figure 4 illustre de façon schématique partielle les connexions des liaisons séries au sein d'un super noeud et avec un noeud des autres super noeuds de l'ensemble,
- la figure 5 illustre de façon schématique un exemple de structure d'un noeud dans le cas d'une configuration inférieure à la configuration maximale,
- la figure 6 illustre de façon schématique la structure de l'ensemble informatique dans le cas d'une configuration comportant seulement deux noeuds.

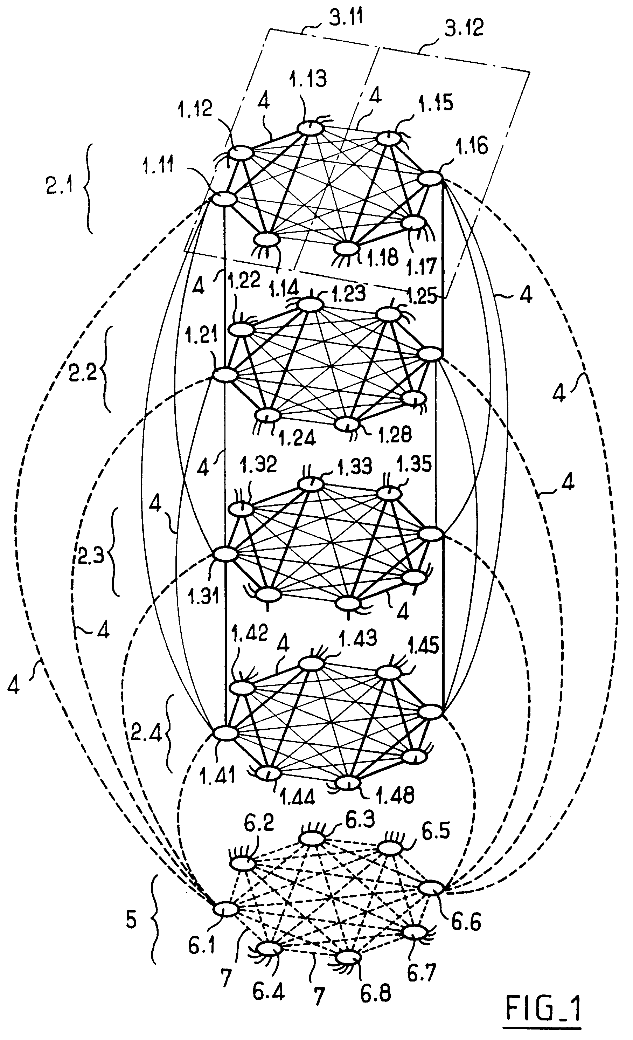

En référence à la figure 1, l'ensemble informatique selon l'invention est un ensemble à mémoire partagée, c'est-à-dire un ensemble dans lequel la mémoire générale à laquelle tous les processeurs doivent pouvoir avoir accès est répartie selon des mémoires locales auxquelles chacun des processeurs peut avoir accès de façon directe ou indirecte, les processeurs étant eux-mêmes regroupés selon des noeuds associés entre eux par des liaisons. Sur la figure 1, les noeuds de processeurs comportent la référence numérique générale 1 et, selon un aspect de l'invention, l'ensemble des noeuds 1 est divisé selon des super noeuds portant la référence numérique générale 2. L'ensemble illustré comporte quatre super noeuds 2 comprenant chacun huit noeuds 1. Pour permettre une identification particulière des noeuds et des super noeuds, la référence générale est associée à une référence particulière. Ainsi, le premier super noeud porte la référence complète 2.1, le deuxième super noeud porte la référence complète 2.2, le troisième super noeud porte la référence complète 2.3 et le quatrième super noeud porte la référence complète 2.4. Au sein de chaque super noeud 2, chaque noeud 1 porte une référence particulière l'identifiant d'une part par le super noeud auquel il appartient (premier chiffre de la référence particulière) et d'autre part par son numéro d'ordre dans le super noeud (second chiffre de la référence particulière). Ainsi, le premier noeud du premier super noeud porte la référence complète 1.11, le second noeud du premier super noeud porte la référence complète 1.12, le troisième noeud du premier super noeud porte la référence complète 1.13.... Le premier noeud du second super noeud 2.2 porte la référence complète 1.21, le second noeud du second super noeud 2.2 porte la référence complète 1.22.....

Chaque super noeud 2 est divisé en deux sous-ensembles 3 matérialisés par un trait pointillé mixte pour le super noeud 2.1. Sur la figure 1, le premier sous-ensemble du super noeud 2.1 qui inclut les noeuds 1.11, 1.12, 1.13 et 1.14, porte la référence complète 3.11 et le second sous-ensemble qui comprend les noeuds 1.15, 1.16, 1.17 et 1.18, porte la référence complète 3.12. les noeuds sont reliés les uns aux autres par des liaisons séries 4 illustrées par un trait continu épais lorsqu'il s'agit d'une liaison série double et par un trait continu fin lorsqu'il s'agit d'une liaison série simple. On notera qu'une liaison série simple au sens de la présente description est, de façon habituelle constituée de deux paires différentielles blindées formant une liaison logique unique et représentée à ce titre par un trait simple sur les figures.

Selon l'invention les noeuds d'un sous-ensemble 3 sont reliés entre eux par des liaisons séries doubles et sont reliés aux noeuds d'un sous-ensemble adjacent du même super noeud 2 par des liaisons séries simples. Ainsi, le noeud 1.11 est relié par des liaisons séries doubles à chacun des noeuds 1.12, 1.13 et 1.14 du même sous-ensemble 3.11, et par des liaisons simples aux noeuds 1.15, 1.16, 1.17 et 1.18 du sous-ensemble adjacent 3.12 du même super noeud 2.1.

Dans le mode de réalisation préféré illustré, les super noeuds 2 sont reliés par paires par des liaisons séries doubles associant chaque noeud d'un super noeud à un noeud correspondant d'un autre super noeud. Ainsi, les deux super noeuds 2.1 et 2.2 sont appairés en établissant une liaison double entre le noeud 1.11 et le noeud 1.21, entre le noeud 1.12 et le noeud 1.22..... ces liaisons doubles n'étant marquées sur la figure que pour les noeuds latéraux extrêmes de la représentation schématique illustrée et étant marqués seulement par un départ de trait épais pour les autres noeuds. De la même façon, les super noeuds 2.3 et 2.4 sont appairés par des liaisons double reliant respectivement le noeud 1.31 au noeud 1.41, le noeud 1.32 au noeud 1.42....

Par ailleurs, chaque paire de super noeuds associés est reliée à une autre paire de super noeuds associés par des liaisons séries simples reliant chaque noeud d'une paire à deux noeuds correspondants de l'autre paire. Ainsi, le noeud 1.11 est relié par une liaison série simple au noeud 1.31 et au noeud 1.41... le noeud 1.21 est également relié par une liaison série simple au noeud 1.31 et au noeud 1.41.... de même que précédemment pour les liaisons doubles entre deux super noeuds appairés, les liaisons simples entre deux paires de super noeuds ont été marquées sur la figure seulement pour les noeuds latéraux extrêmes, les autres liaisons simples étant seulement marquées par un départ de trait fin à partir de chaque noeud.

Selon le mode de réalisation préféré illustré, l'ensemble informatique selon l'invention comporte en outre un super noeud 5 d'organes d'entrée/sortie portant la référence générale 6, chaque organe d'entrée/sortie 6 étant relié par une liaison série 4 à un noeud correspondant de chacun des super noeuds. Ainsi, sur la figure 1, les organes d'entrée/sortie portent respectivement les références numériques complètes 6.1, 6.2..... L'organe d'entrée/sortie 6.1 est relié par des liaisons séries simples 4 aux noeuds 1.11, 1.21, 1.31 et 1.41 ; l'organe d'entrée/sortie 6.2 est relié aux noeuds 1.12, 1.22, 1.32 et 1.42.... et, au sein du super noeud 5, les organes d'entrée/sortie sont également reliés entre eux par une liaison séries simples 7. De même que précédemment les liaisons séries simples entre les organes d'entrée/sortie ont toutes été représentées sur la figure, tandis que les liaisons séries avec les noeuds de processeurs ont été représentées seulement pour les noeuds latéraux extrêmes. On notera que pour une plus grande clarté de l'illustration, les organes d'entrée/sortie 6 ont été regroupés à la partie inférieure du diagramme schématique de la figure 1 mais, dans la réalité, ils seront généralement répartis à différents niveaux de la machine comportant l'ensemble informatique selon l'invention.

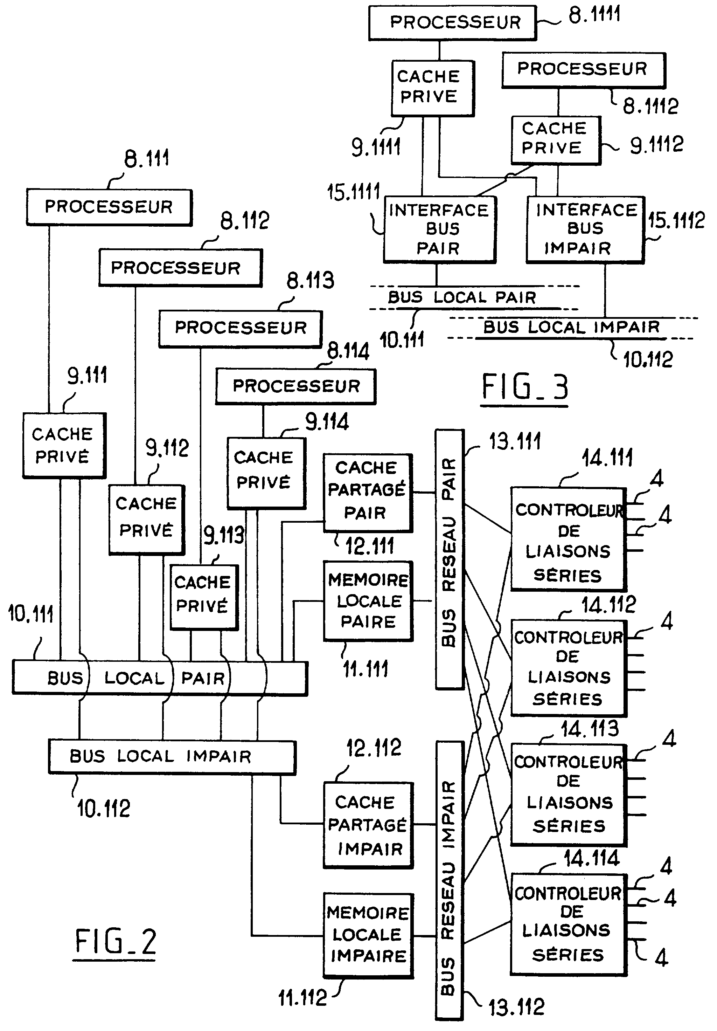

La figure 2 illustre de façon schématique la structure d'un mode de réalisation d'un noeud selon l'invention. Selon ce mode de réalisation, chaque noeud comporte quatre processeurs comportant la référence générale 8 et une référence particulière permettant d'identifier par rapport au noeud auquel il appartient (deux premiers chiffres de la référence particulière), et par son numéro d'ordre dans le noeud (dernier chiffre de la référence particulière). On supposera par la suite que la figure 2 illustre la structure du noeud 1.11 et, pour identifier chacun des processeurs en relation avec ce noeud, ceux-ci portent les références numériques complètes 8.111,8.112, 8.113 et 8.114. Par analogie on comprendra que pour le noeud 1.43 par exemple, les références complètes des processeurs seront 8.431, 8.432, 8.433 et 8.434.

Chaque processeur est associé à un cache privé portant la référence générale 9, et respectivement les références complètes 9.111, 9.112, 9.113 et 9.114. On sait que le terme de cache est utilisé de façon habituelle pour désigner une mémoire contenant des informations qui sont des copies d'une information détenue de façon originale à une adresse de la mémoire générale de l'ensemble informatique afin qu'un processeur d'instructions particulier puisse utiliser cette information de façon plus rapide que s'il devait interroger systématiquement la mémoire générale à chaque fois qu'il exécute une instruction mettant en oeuvre cette information. Au sens de la présente description, le terme de cache privé sera utilisé pour un cache auquel un processeur d'instructions est relié de façon directe. Chacun des caches privés 9 est relié à deux bus locaux portant la référence générale 10 et, respectivement, les références complètes 10.111 et 10.112.

Au sens de la présente description, le terme de mémoire locale est utilisé pour une mémoire comportant une partie de la mémoire générale, c'est-à-dire une partie des informations originales accessibles par l'ensemble des microprocesseurs. Le terme de cache partagé est utilisé pour désigner une mémoire qui contient des copies d'informations contenues dans les mémoires locales des autres noeuds de l'ensemble informatique et qui est destinée à être utilisée par les différents processeurs du noeud dans lequel le cache partagé est disposé. De façon habituelle les caches privés, les caches partagés et les mémoires locales comprennent des processeurs de gestion qui n'ont pas été représentés sur les figures.

Lorsqu'une information nécessaire à l'un des processeurs n'est pas disponible dans le cache privé auquel il est relié, une interrogation est faite au niveau de la mémoire locale du noeud si celle-ci détient de façon habituelle cette information sous sa forme originale, ou au niveau du cache partagé si cette information est habituellement détenue de façon originale par la mémoire locale d'un autre noeud. Si une information détenue de façon habituelle par la mémoire locale d'un autre noeud n'est pas disponible au niveau du cache partagé, le processeur de gestion de ce cache partagé interroge la mémoire locale du noeud qui détient habituellement cette information de façon originale. Les caches privés, les caches partagés et les mémoires locales peuvent donc être considérés comme une hiérarchie de mémoires. Chaque cache privé est une mémoire de niveau le plus élevé de la hiérarchie pour un noeud considéré, chaque cache partagé est une mémoire de second niveau de la hiérarchie pour le noeud considéré et chaque mémoire locale est donc une mémoire de second niveau de la hiérarchie pour le noeud considéré et de troisième niveau de la hiérarchie pour les autres noeuds.

Dans le mode de réalisation de la figure 2, la partie de mémoire générale associée au noeud a été subdivisée en deux mémoires locales, la mémoire locale paire 11.111 qui contient les informations à des adresses paires et qui est associée au bus local paire 10.111, et la mémoire locale impaire 11.112 qui contient des informations détenues aux adresses impaires et qui est reliée au bus local impair 1.112. De même, le cache partagé associé au noeud à été divisé en un cache partagé pair 12.111 contenant des copies d'informations d'adresses paires, et relié au bus local paire 10.111, et le cache partagé impair 12.112 contenant des copies d'informations à des adresses impaires et relié au bus local impair 10.112. Chaque mémoire locale et chaque cache partagé est relié à un bus réseau 13 assurant une liaison parallèle, respectivement 13.111 pour le bus réseau pair et 13.112 pour le bus réseau impair.

Les bus réseaux sont reliés à des contrôleurs de liaisons séries 14, respectivement 14.111, 14.112, 14.113 et 14.114 dans le mode de réalisation illustré. Les contrôleurs de liaisons séries 14 assurent un interface entre les bus réseaux et les liaisons séries 4 qui assurent les liaisons entre les noeuds. A cet effet, les contrôleurs de liaisons séries 14 sont reliés à chacun des bus réseaux 13. Dans le mode de réalisation illustré, chaque noeud est associé à d'autres noeuds, et aux organes d'entrée/sortie par un total de 15 liaisons séries. Les bus réseaux pourraient être reliés aux liaisons séries par un interface comportant un seul contrôleur de liaisons séries. Toutefois, pour des raisons technologiques, la puissance consommée serait trop importante et provoquerait un échauffement inacceptable de cette interface. C'est la raison pour laquelle l'interface entre les bus réseaux et les liaisons séries a été subdivisée en quatre contrôleurs de liaisons séries. Le nombre de contrôleurs de liaisons séries utilisé dépend bien entendu du nombre de liaisons séries qui doivent être raccordées à un noeud mais également du nombre de prises qu'il est acceptable de disposer sur les bus réseaux pour assurer la liaison entre ces bus réseaux et les contrôleurs de liaisons séries. Dans le mode de réalisation illustré on remarquera que chaque bus de type parallèle, qu'il s'agisse des bus locaux ou des bus réseaux est équipé de six prises, ce qui permet d'assurer un débit de messages suffisant sans augmenter de façon indue la complexité des protocoles de transmission de ces messages.

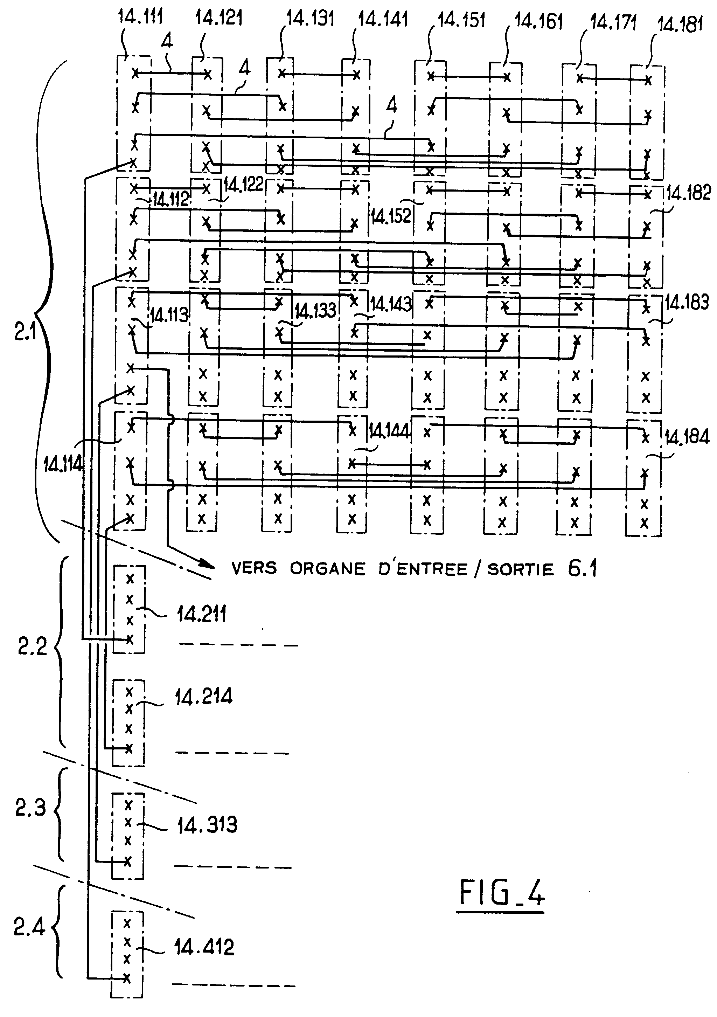

La figure 4 illustre la répartition des liaisons séries entre les contrôleurs de liaisons séries d'un même super noeud et avec les contrôleurs de liaisons séries des autres super noeuds auxquels un super noeud est associé. Les lignes entre les contrôleurs de liaisons séries et les bus réseaux n'ont pas été représentées. Pour des raisons de simplification du schéma on a seulement représenté sur la figure 4 la répartition des liaisons séries entre les contrôleurs de liaisons séries du premier super noeud 2.1 et, pour les liaisons avec les autres super noeuds on a représenté seulement la répartition des liaisons séries entre le noeud 1.11 et les contrôleurs de liaisons séries correspondants des autres super noeuds.

Sur cette figure, chaque contrôleur de liaisons séries est représenté par un rectangle en trait mixte et les connexions d'une liaison série 4 avec un contrôleur de liaisons séries sont représentées par un trait continu pour chaque liaison série simple. Par référence au système de numérotation adopté précédemment, le premier contrôleur de liaisons séries du noeud 1.11 porte la référence complète 14.111 tandis que le premier contrôleur de liaisons séries du noeud 1.12 porte la référence complète 14.121...... le second contrôleur de liaisons séries du noeud 1.11 porte la référence complète 14.112, le second contrôleur de liaisons séries du noeud 1.12 porte la référence complète 1.122....

A titre d'exemple, la liaison série double reliant le noeud 1.11 avec le noeud 1.12 est illustrée par une liaison série simple reliant le contrôleur de liaisons séries 14.111 et le contrôleur de liaisons séries 14.121 et une liaison série simple reliant le contrôleur de liaison séries 14.112 et le contrôleur de liaisons séries 14.122 ; la liaison série double reliant le noeud 1.11 au noeud 1.14 est illustrée par une liaison simple reliant le contrôleur de liaisons séries 14.113 au contrôleur de liaisons séries 14.143 et une liaison série simple reliant le contrôleur de liaisons séries 14.114 au contrôleur de liaisons séries 14.144 ; la liaison série double reliant le noeud 1.11 et le noeud 1.21 est illustrée par une liaison série simple reliant le contrôleur de liaisons séries 14.111 et le contrôleur de liaisons séries 14.211, et une liaison série simple reliant le contrôleur de liaisons séries 14.114 au contrôleur de liaisons séries 14.214. La liaison série simple reliant le noeud 1.11 au noeud 1.31 est illustrée par la liaison série simple reliant le contrôleur de liaisons séries 14.113 au contrôleur de liaisons séries 14.313, et la liaison série simple reliant le noeud 1.11 au noeud 1.41 est illustrée par la liaison série simple reliant le contrôleur de liaisons séries 14.112 au contrôleur de liaisons séries 14.412.

Le contrôleur de liaisons séries 14.113 comporte en outre une borne reliée au contrôleur de liaisons séries de l'organe d'entrée 6.1, et qui n'a pas été représenté sur la figure. Le contrôleur de liaisons séries 14.114 comporte une borne non affectée qui peut, le cas échéant, servir à assurer une liaison série double entre le noeud 1.11 et l'organe d'entrée/sortie 6.1.

On notera que les liaisons ainsi établies permettent d'aller d'un noeud quelconque à un autre noeud quelconque en utilisant seulement deux liaisons séries. A titre d'exemple on passe du noeud 1.11 au noeud 1.33 en utilisant d'abord l'une des liaisons séries du noeud 1.11 au noeud 1.13 puis la liaison série reliant le noeud 1.13 au noeud 1.33. De même on passe du noeud 1.35 au noeud 1.22 en utilisant la liaison série du noeud 1.35 au noeud 1.32 puis la liaison série du noeud 1.32 au noeud 1.22. Compte tenu du maillage du super noeud 5 d'organes d'entrée/sortie, cette propriété est également obtenue pour la liaison de l'un quelconque des organes d'entrée/sortie avec l'un quelconque des noeuds. On remarquera à ce propos qu'un organe d'entrée/sortie n'est pas habituellement destiné à fonctionner avec l'ensemble des noeuds et on peut donc économiser des liaisons en supprimant celles qui relient les organes d'entrée/sortie entre eux.

On remarquera à ce propos que pour simplifier les protocoles de routage des messages il est préférable d'utiliser systématiquement le même type de combinaison de chemins, par exemple, une liaison série à l'intérieur d'un super noeud avant une liaison série entre super noeuds. A ce propos on notera également que lorsque deux liaisons séries qui doivent être utilisées successivement ne sont pas reliées au même contrôleur de liaisons séries, le message transmis passe par le bus réseau du noeud intermédiaire. Dans le premier exemple donné ci-dessus un message va donc passer successivement dans la liaison série reliant les contrôleurs de liaisons séries 14.111 et 14.131, sur le bus réseau du noeud 1.13 pour aller du contrôleur de liaisons séries 14.131 au contrôleur de liaisons séries 14.133, puis du contrôleur de liaisons séries 14.133 au contrôleur de liaisons séries 14.333 du noeud 1.33.

La figure 3 illustre de façon partielle une variante de réalisation du noeud illustré sur la figure 2 permettant de multiplier par deux le nombre de processeurs du noeud sans augmenter le nombre de prises sur les bus locaux et sans changer par ailleurs les liaisons entre les noeuds. Dans cette variante de réalisation, chacun des processeurs et le cache privé qui lui est associé est remplacé par deux processeurs chacun associé à un cache privé. La figure 3 illustre le dédoublement du processeur 8.111 de la figure 2, un dédoublement identique étant bien entendu effectué pour les autres processeurs du même noeud afin de ne pas compliquer de façon indue la gestion des messages avec le noeud. Le processeur 8.111 est donc remplacé par un processeur 8.1111 et un processeur 8.1112 respectivement reliés à un cache privé 9.1111 et un cache privé 9.1112. Chaque cache privé est relié à deux interfaces 15 pour la liaison avec les bus locaux, un interface bus pair 15.1111 qui est relié au bus local pair 10.111 et un interface bus impair 15.1112 qui est relié au bus local impaire 10.112.

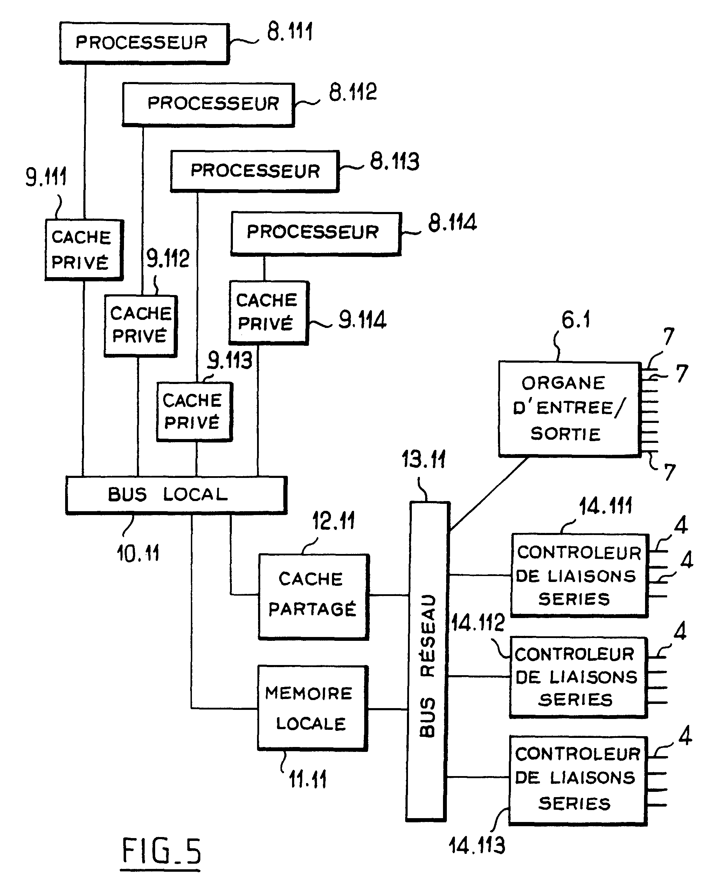

En relation avec la figure 2, on remarquera que le dédoublement des bus locaux et des bus réseaux en deux bus l'un associé aux adresses paires et l'autre associé aux adresses impaires permet de diminuer la latence des relations avec la mémoire locale et le cache partagé sans augmenter le nombre de prises au niveau de chaque bus du type parallèle. Lorsque la puissance des processeurs installés dans chaque noeud où le degré de partage des informations entre les noeuds ne justifie pas un ensemble aussi sophistiqué, on peut réaliser l'ensemble selon l'invention en prévoyant dans chaque noeud un seul bus local et un seul bus réseau associés à une seule mémoire locale et un seul cache partagé comme illustré par la figure 5. Dans ce mode de réalisation, le noeud comporte comme précédemment 4 processeurs 8.111, 8.112, 8.113 et 8.114 respectivement reliés à des caches privés 9.111, 9.112, 9.113 et 9.114 associés à un seul bus local 10.11 qui est lui-même relié à une seule mémoire locale 11.11 et un seul cache partagé 12.11. La mémoire locale et le cache partagé sont reliés à un bus réseau unique 13.11. On remarquera que dans cette configuration le bus local ne sert comme précédemment qu'à la transmission des messages nécessaires aux processeurs du noeud pour prélever les informations contenues dans la mémoire locale ou les copies d'informations contenues dans le cache partagé tandis que le bus réseau sert à la transmission des messages destinés à mettre à jour des informations de la mémoire locale ou du cache partagé, ou à amener dans le cache partagé les copies demandées par celui-ci d'informations contenues dans les mémoires locales des autres noeuds, ou à prélever dans la mémoire locale du noeud des informations demandées par les caches partagés des autres noeuds.

On remarquera également que le mode de réalisation illustré par la figure 5 correspond à une configuration inférieure à la configuration maximale, c'est-à-dire une configuration comportant un nombre de noeuds inférieur au nombre de noeuds représentés sur la figure 1 de sorte que le nombre de liaisons séries a été ramené à douze et le nombre de contrôleurs de liaisons séries a été ramené à trois. Dans ces conditions, le nombre de prises du bus réseau utilisées par la mémoire locale, le cache partagé et les contrôleurs de liaisons séries est de cinq seulement de sorte qu'il est alors possible de relier directement l'organe d'entrée/sortie 6.1 sur le bus réseau 13.11. Dans ce cas le contrôleur de liaisons séries de l'organe d'entrée/sortie 6.1 (non représenté sur la figure) sert seulement à assurer la gestion des messages sur les liaisons séries 7 réunissant les organes d'entrée/sortie entre eux.

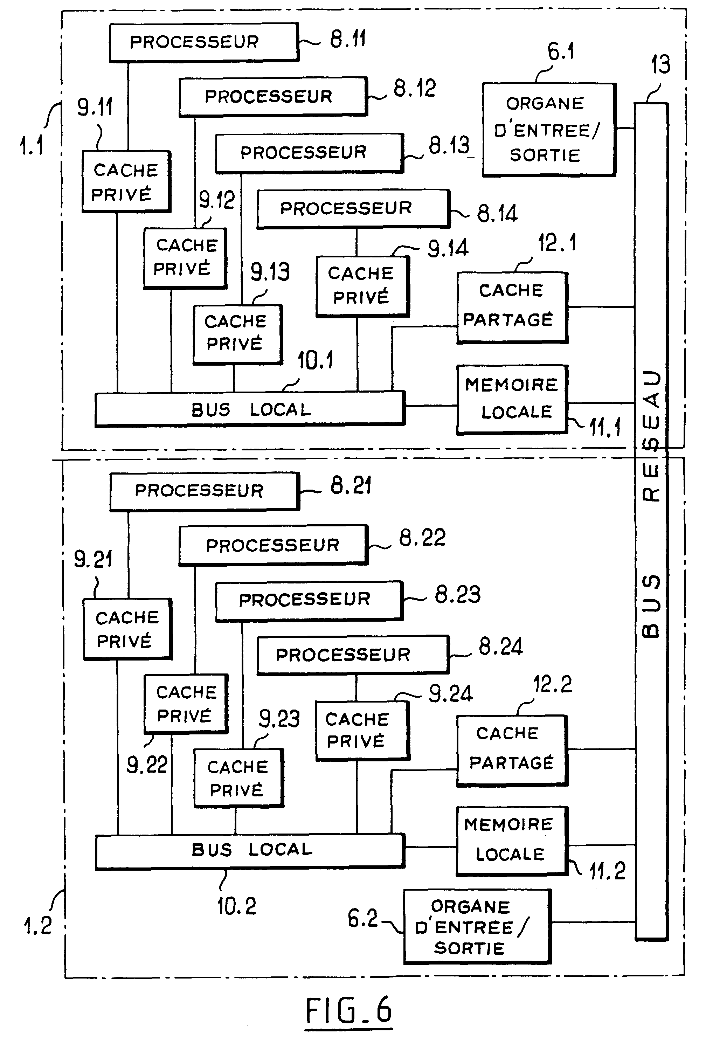

La figure 6 illustre une configuration encore plus simple ne comportant que deux noeuds 1.1 et 1.2 matérialisés par des cadres en traits mixtes sur cette figure. Comme précédemment, chaque noeud comporte 4 processeurs, respectivement référencés 8.11, 8.12, 8.13 et 8.14 pour le noeud 1.1; et 8.21, 8.22, 8.23 et 8.24 pour le noeud 1.2. Les processeurs sont respectivement reliés à des caches privés 9.12, 9.12.... et 9.21, 9.22.... eux-mêmes reliés à deux bus locaux, respectivement 10.1 et 10.2. Les bus locaux sont chacun relié à une mémoire locale, respectivement 11.1 et 11.2, et à un cache partagé, 12.1 et 12.2. Dans cette configuration, chaque noeud comporte également un organe d'entrée/sortie, respectivement 6.1 et 6.2. On constate qu'au lieu de prévoir un bus réseau dans chaque noeud et des liaisons séries entre les noeuds, il est alors plus avantageux de prévoir un bus réseau commun 13 qui est équipé de six prises comme dans les exemples précédents.

Bien entendu l'invention n'est pas limitée aux modes de réalisation décrits et on peut y apporter des variantes de réalisation sans sortir du cadre de l'invention tel que défini par les revendications.

En particulier, bien que l'invention ait été décrite à propos d'un ensemble informatique comprenant plusieurs noeuds qui sont reliés soit par l'intermédiaire de liaisons séries comme décrits en relation avec les figures 2 et 5, soit par un bus réseau commun comme décrit en relation avec la figure 6, l'invention présente également un intérêt même lorsque l'ensemble informatique ne comprend qu'un seul noeud de processeurs. En effet, dans ce cas, la mémoire locale qui devient la mémoire unique de l'ensemble informatique est traitée par le cache partagé comme si elle était la mémoire locale d'un autre noeud de sorte que des informations fréquemment utilisées sont copiées dans le cache partagé en passant par le bus réseau et se trouvent alors disponibles à la fois dans la mémoire et dans le cache partagé de sorte que le débit des messages d'interrogations de la mémoire par les processeurs est diminué de façon très sensible. Dans le cas où le cache partagé est d'une technologie d'accès plus performante que la mémoire on peut même prévoir qu'une majeure partie des messages d'interrogations seront alors traités par le cache partagé en dépit du fait que ces informations sont également contenues dans la mémoire.

La structure de noeuds selon l'invention permet donc une optimisation des débits de messages sur les différentes liaisons quelle que soit la configuration que l'on souhaite réaliser. En particulier, pour une configuration allant jusqu'à quatre processeurs, on utilisera un seul noeud de structure conforme à l'invention, pour une configuration évolutive de 1 à 8 processeurs, on utilisera de préférence la structure décrite en relation avec la figure 6, pour un ensemble informatique ayant une configuration évolutive comprenant de 4 à 32 processeurs on réalisera de préférence une structure reproduisant la structure d'un super noeud selon l'invention, pour une configuration évolutive comprenant de 8 à 64 processeurs on réalisera de préférence une structure comprenant deux super noeuds et pour une configuration comprenant de 16 à 128 processeurs on répartira de préférence ces processeurs selon quatre super noeuds.

## Revendications

1. Noeud de processeurs comportant des processeurs (8), une mémoire locale partagée (11) et au moins un bus local (10) assurant une liaison parallèle entre les processeurs (8), caractérisé en ce qu'il comprend :
- un cache local partagé (12), le bus local (10) assurant une liaison parallèle entre les processeurs (8), la mémoire locale partagée (11) et le cache local partagé (12), le bus local n'étant utilisé que pour la transmission de messages directement utiles aux processeurs,
- des moyens de liaison dudit noeud à au moins un autre noeud ou le cas échéant à un organe d'entrée/sortie (6),
- au moins un bus réseau (13) assurant une liaison parallèle entre la mémoire locale partagée (11), le cache local partagé (12) et lesdits moyens de liaison ainsi que le cas échéant à au moins un organe d'entrée/sortie (6), le bus réseau étant utilisé pour la transmission de messages de liaisons entre noeuds.

2. Noeud de processeurs selon la revendication 1, caractérisé en ce que lesdits moyens de liaison comprennent au moins un contrôleur de liaisons séries (14) relié au bus réseau et assurant la relation avec au moins un autre noeud ou le cas échéant avec un organe d'entrée/sortie.

3. Noeud de processeurs selon la revendication 1, caractérisé en ce qu'il comporte deux bus locaux (10.111,10.112) chacun associé aux processeurs (8), à un cache local partagé (12.111, 12.112) et à une mémoire locale partagée (11.111,11.112), et deux bus réseaux (13.111, 13.112) également chacun associé à un cache local partagé (12.111, 12.112) et à une mémoire locale partagée (11.111, 11.112).

4. Noeud de processeurs selon les revendications 2 et 3, caractérisé en ce que les deux bus réseaux (13.111,13.112) sont chacun associés à chaque contrôleur de liaisons séries (14).

5. Noeud de processeurs selon la revendication 1, caractérisé en ce qu'il comporte un cache privé (9) associé à chaque processeur et disposé entre le processeur et le bus local (10).

6. Noeud de processeurs selon les revendications 3 et 5, caractérisé en ce qu'il comporte deux interfaces (15) chacun associé à deux caches privés (9.1111, 9.1112) et à un bus local (10.111, 10.112).

7. Noeud de processeurs selon l'une des revendications 1, 5 ou 6, caractérisé en ce qu'il comporte deux séries de processeurs (8.11-8.14, 8.21-8.24) chacune associée à un bus local (10.1, 10.2) et à une mémoire locale partagée (11.1, 11.2),et un bus réseau (13) commun aux deux séries de processeurs.

8. Système informatique à mémoire partagée comportant au moins deux noeuds de processeurs selon l'une des revendications 1 à 7.

## Patentansprüche

1. Prozessorknoten, mit Prozessoren (8), einem gemeinsam genutzten lokalen Speicher (11) und wenigstens einem lokalen Bus (10), der eine parallele Verbindung zwischen den Prozessoren (8) sicherstellt, dadurch gekennzeichnet, daß er enthält:
- einen gemeinsam genutzten lokalen Cache (12), wobei der lokale Bus (10) eine parallele Verbindung zwischen den Prozessoren (8), dem gemeinsam genutzten lokalen Speicher (11) und dem gemeinsam genutzten lokalen Cache (12) sicherstellt, wobei der lokale Bus nur für die Übertragung von für die Prozessoren direkt nützlichen Nachrichten verwendet wird,
- Mittel zum Verbinden des Knotens mit wenigstens einem anderen Knoten oder gegebenenfalls mit einem Eingangs/Ausgangselement (6),
- wenigstens einen Netzbus (13), der eine parallele Verbindung zwischen dem gemeinsam genutzten lokalen Speicher (11), dem gemeinsam genutzten lokalen Cache (12) und den Verbindungsmitteln sowie gegebenenfalls mit wenigstens einem Eingangs-/Ausgangselement (6) sicherstellt, wobei der Netzbus für die Übertragung von Verbindungsnachrichten zwischen Knoten verwendet wird.

2. Prozessorknoten nach Anspruch 1, dadurch gekennzeichnet, daß die Verbindungsmittel wenigstens eine Serienverbindungs-Steuereinrichtung (14) enthalten, die mit dem Netzbus verbunden ist und die Beziehung zu wenigstens einem weiteren Knoten oder gegebenenfalls zu einem Eingangs-/Ausgangs-Element sicherstellt.

3. Prozessorknoten nach Anspruch 1, dadurch gekennzeichnet, daß er zwei lokale Busse (10.111, 10.112), wovon jeder den Prozessoren (8), einem gemeinsam genutzten lokalen Cache (12.111, 12.112) und einem gemeinsam genutzten lokalen Speicher (11.111, 11.112) zugeordnet ist, und zwei Netzbusse (13.111, 13.112), wovon jeder ebenfalls einem gemeinsam genutzten lokalen Cache (12.111, 12.112) und einem gemeinsam genutzten lokalen Speicher (11.111, 11.112) zugeordnet ist, enthält.

4. Prozessorknoten nach den Ansprüchen 2 und 3, dadurch gekennzeichnet, daß die beiden Netzbusse (13.111, 13.112) jeweils jeder Serienverbindung-Steuereinrichtung (14) zugeordnet sind.

5. Prozessorknoten nach Anspruch 1, dadurch gekennzeichnet, daß er einen privaten Cache (9) enthält, der jedem Prozessor zugeordnet ist und zwischen dem Prozessor und dem lokalen Bus (10) angeordnet ist.

6. Prozessorknoten nach den Ansprüchen 3 und 5, dadurch gekennzeichnet, daß er zwei Schnittstellen (15) enthält, wovon jeder zwei private Caches (9.1111, 9.1112) und ein lokaler Bus (10.111, 10.112) zugeordnet sind.

7. Prozessorknoten nach einem der Ansprüche 1, 5 oder 6, dadurch gekennzeichnet, daß er zwei Reihen von Prozessoren (8.11-8.14, 8.21-8.24), wovon jeder ein lokaler Bus (10.1, 10.2) und ein gemeinsam genutzter lokaler Speicher (11.1, 11.2) zugeordnet ist, und einen Netzbus (13), der den beiden Reihen von Prozessoren gemeinsam ist, enthält.

8. Datenverarbeitungssystem mit gemeinsam genutztem Speicher, das wenigstens zwei Prozessorknoten nach einem der Ansprüche 1 bis 7 enthält.

## Claims

1. Processor node comprising processors (8), a shared local memory (11) and at least one local bus (10) ensuring a parallel link between the processors (8), characterised in that it comprises:
- a shared local cache (12), the local bus (10) providing a parallel link between the processors (8), the shared local memory (11) and the shared local cache (12), the local bus being used only for the transmission of messages that are of direct use to the processors,
- means for linking said node to at least one other node or, where appropriate, to an input/output member (6),
- at least one network bus (13) providing a parallel link between the shared local memory (11), the shared local cache (12) and said linking means and also, where appropriate, to at least one input/output member (6), the network bus being used for the transmission of linking messages between nodes.

2. Processor node according to Claim 1, characterised in that said linking means comprise at least one serial link controller (14) connected to the network bus and ensuring the relationship with at least one other node or, where appropriate, with an input/output member.

3. Processor node according to Claim 1, characterised in that it comprises two local buses (10.111, 10.112) each associated with the processors (8), with a shared local cache (12.111, 12.112) and with a shared local memory (11.111, 11.112), and two network buses (13.111, 13.112) also each associated with a shared local cache (12.111, 12.112) and with a shared local memory (11.111, 11.112).

4. Processor node according to Claims 2 and 3, characterised in that the two network buses (13.111, 13.112) are each associated with each serial link controller (14).

5. Processor node according to Claim 1, characterised in that it comprises a private cache (9) associated with each processor and arranged between the processor and the local bus (10).

6. Processor node according to Claims 3 and 5, characterised in that it comprises two interfaces (15) each associated with two private caches (9.1111, 9.1112) and with a local bus (10.111, 10.112).

7. Processor node according to one of Claims 1, 5 or 6, characterised in that it comprises two series of processors (8.11-8.14, 8.21-8.24) each associated with a local bus (10.1, 10.2) and with a shared local memory (11.1, 11.2), and a network bus (13) common to two series of processors.

8. Shared-memory processing system comprising at least two processor nodes according to one of Claims 1 to 7.
